# DEMANDE DE BREVET EUROPEEN

(11) **EP 1 946 993 A1**
(43) Date de publication de la demande: **23.07.2008**
(21) Numéro de dépôt: 07301640.4
(22) Date de dépôt: 07.12.2007
(51) Int. Cl.: B62D 5/12, B62D 7/14, B62D 7/15, B62D 21/02, E01H 1/00

(54) **Dispositif de passage d'un mode quatre roues directrices à un mode deux roues directrices pour véhicule automoteur de nettoyage de voirie**

(30) Priorité: 22.01.2007 FR 0700396
(71) Demandeur: Mathieu Yno, 54200 Toul (FR)
(72) Inventeur: Verbeyst, Olivier, 54200 Villey Saint Etienne (FR); Gaude, Simon, 54000 Nancy (FR)
(74) Mandataire: Poupon, Michel

(57) **Abrégé**

Un dispositif de passage d'un mode de conduite « quatre roues directrices » à un mode de conduite « deux roues directrices » et inversement, d'un véhicule automoteur de balayage de voirie à deux modes de circulation, un mode travail pour lequel la vitesse du véhicule est inférieure à vitesse prédéterminée et un mode route pour lequel la vitesse du véhicule est supérieure à la vitesse prédéterminée, ledit véhicule comportant deux essieux portés par un châssis à longerons parallèles à la direction du déplacement, caractérisé en ce que le dispositif comporte un système de tringleries et de vérins de arrière (18) et de couplage (28) pouvant être ou non mis en charge de façon à coupler ou désaccoupler les essieux avant et arrière. De façon préférentielle le châssis est modifié pour y intégrer le système de tringlerie et le vérin de couplage (28).

## Description

Dispositif de passage d'un mode de conduite à quatre roues directrices à un mode de conduite à deux roues directrices sur un véhicule, et véhicule équipé du dispositif.

La présente invention s'applique à un véhicule automoteur de balayage-nettoyage de voirie du type comportant une cabine de pilotage et pouvant circuler sur des voies de circulation automobile.

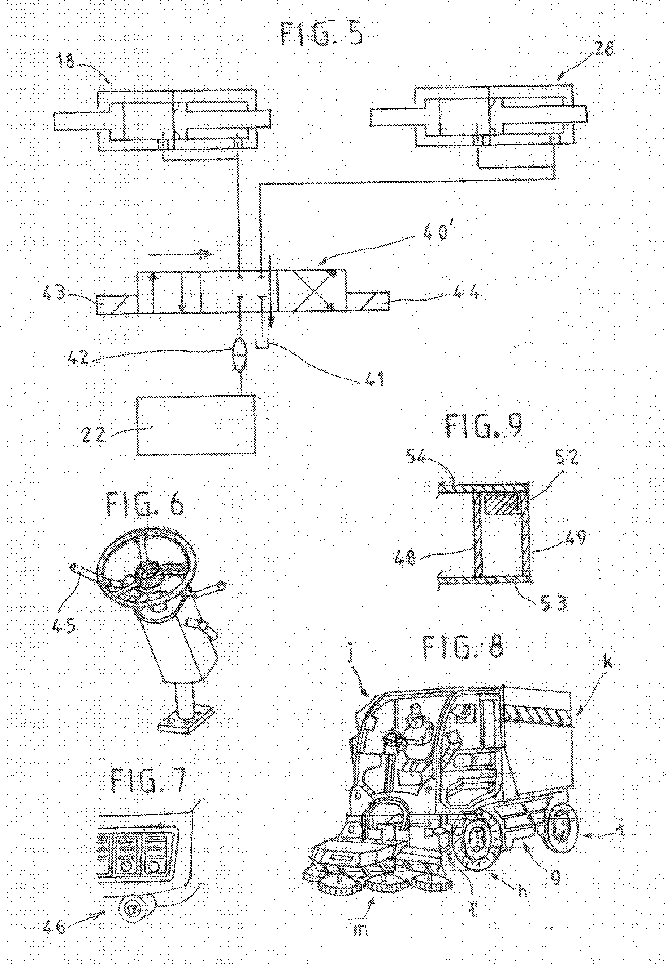

Des véhicules de ce type existent déjà et la demanderesse a déjà obtenu plusieurs brevets perfectionnant ces véhicules. Ils se composent principalement (voir figure 8) d'un châssis (g) monté sur un essieu avant (h) et un essieu arrière (i) et portant à l'avant une cabine de pilotage (j) accueillant un conducteur et éventuellement un passager, et à l'arrière une cuve (k) de collecte des déchets. Lesdits déchets sont collectés et conduits dans la cuve, par un ensemble de balayage (m) monté à l'avant de la cabine, vers une buse d'aspiration débouchant sous la cabine et constituant l'extrémité d'un conduit d'aspiration reliant ladite buse à une cuve équipée d'une turbine d'aspiration située en haut de ladite cuve et à l'intérieur de celle-ci. Des éléments fonctionnels supplémentaires tels que rampe d'arrosage, dispositif d'aspiration d'eau résiduelle, peuvent être ajoutés entre l'ensemble de brossage et la buse d'aspiration.

La demanderesse a déjà développé un modèle de véhicule de ce type comportant deux modes de fonctionnement, à savoir :
- un mode travail pour lequel la vitesse du véhicule est inférieure à une vitesse prédéterminée par exemple 25 km/heure privilégiant la maniabilité avec l'utilisation possible en mode quatre roues directrices,
- un mode route pour lequel la vitesse du véhicule est supérieure à ladite vitesse prédéterminée, avec les roues avant directrices et l'essieu arrière aligné et bloqué.

Le dispositif de blocage de l'essieu arrière objet d'une demande antérieure sous le numéro FR 05 11587 est principalement composé d'un système mécanique avec un vérin de blocage à course verticale pouvant se bloquer dans un logement d'une platine horizontale, l'ensemble étant commandé par un bloc hydraulique piloté par un système électronique, lui-même pilotant également les angles de braquage des roues.

Ce système est très réactif et son fonctionnement sécurisé.

L'objectif de la présente demande de brevet est de proposer un nouveau mode de réalisation d'un dispositif de blocage de l'essieu arrière, commandé uniquement par un ensemble hydraulique afin de s'affranchir du système électronique de pilotage du précédent mode de réalisation résumé ci-dessus, et afin notamment de diminuer les coûts de fabrication.

Cet objectif est atteint par l'invention qui consiste en un dispositif de passage d'un mode de conduite « quatre roues directrices » à un mode de conduite « deux roues directrices » et inversement, d'un véhicule automoteur de balayage de voirie à deux modes de circulation, un mode travail pour lequel la vitesse du véhicule est inférieure à vitesse prédéterminée et un mode route pour lequel la vitesse du véhicule est supérieure à la vitesse prédéterminée, ledit véhicule comportant deux essieux portés par un châssis à longerons parallèles à la direction du déplacement, et dont :
- un essieu avant équipé de moyens aptes à faire pivoter simultanément deux roues avant dans le même sens autour d'axes verticaux tout en restant parallèles entre elles sous l'action d'un vérin de direction actionné par un volant du véhicule.
- un essieu arrière équipé également de moyens aptes à faire pivoter simultanément deux roues arrières dans le même sens autour d'axes verticaux tout en restant parallèles entre elles, l'essieu arrière étant en outre un essieu moteur dont un moteur entraîne les deux roues arrières autour de leur axe horizontal commun de rotation,
caractérisé en ce que le dispositif comporte un système de tringleries et de vérins à commande hydraulique qui permet de dissocier ou d'associer le mouvement de pivotement des roues avant et des roues arrières composé principalement de :
- un vérin arrière hydraulique reliant les deux roues arrières et monté sur rotules, ledit vérin arrière pouvant être soit en charge et fonctionner comme une barre rigide, soit déchargé et laisser sa tige se déplacer librement.
- un dispositif de couplage-découplage composé principalement d'un vérin de couplage monté sur rotule entre une roue avant et une platine verticale montée à rotation sur un longeron latéral du châssis et entre les deux essieux avant et arrière, ledit vérin de couplage pouvant être soit en charge et fonctionner comme une barre rigide, soit déchargé et laisser sa tige se déplacer librement.
- ladite platine verticale pouvant entraîner dans sa rotation lorsque le vérin de couplage est en charge une barre de longueur fixe liée à une biellette de guidage de la roue arrière placée du même côté que la barre par rapport au châssis du véhicule.

La commande des vérins est réalisée hydrauliquement depuis le poste de conduite du véhicule.

Pour pouvoir réduire la largeur du véhicule, à environ 1,3 m tout en conservant un écartement des longerons suffisant pour y placer les autres composants du véhicule, un nouveau châssis a été conçu de manière à pouvoir y intégrer le dispositif mécanique de couplage-découplage des essieux.

On comprendra mieux l'invention à l'aide de la description ci-après faite en référence aux figures annexées suivantes :
- figure 1 : vue de dessus d'un châssis de véhicule de voirie selon l'invention représenté en mode deux roues directrices.
- figure 2 : vue de côté du châssis de la figure 1.
- figure 3 : vue de côté du châssis de la figure 1 représenté en mode quatre roues directrices.
- figure 4 : vue de côté du châssis de la figure 3.
- figure 5 : schéma du circuit de commande hydraulique des vérins de blocage et de couplage du dispositif selon l'invention.
- figure 6 : vue d'ensemble du poste de conduite du véhicule.
- figure 7 : vue partielle du tableau de bord de la cabine de conduite.
- figure 8 : vue générale d'un véhicule de voirie.
- figure 9 : vue en coupe d'un longeron du châssis.

On décrit d'abord l'essieu avant (1) du véhicule qui est composé d'un corps d'essieu (2) en forme de U horizontal fixé à ses deux extrémités (3, 4) par l'intermédiaire de lames de suspension (5, 6) à deux longerons avant du châssis. Le corps (7) d'un vérin de direction (8) disposé horizontalement est monté à pivotement sur rotules sur le corps d'essieu (2), et l'extrémité de sa tige (8) est montée à pivotement sur une bielle de direction (9) solidaire du pivot de direction d'une des roues avant (10). Le vérin (7, 8) est actionné par le volant du véhicule et son allongement ou son retrait provoquent la rotation simultanée des deux roues avant (10, 11) dans le même sens autour d'axes verticaux (12, 13) tout en restant parallèles entre elles, grâce à une barre de liaison (36') placée derrière les roues avant et montée sur rotule sur les biellettes de direction des roues (9, 9'). Le détail du mécanisme étant à la portée de l'homme du métier, n'est pas expliqué davantage.

On décrit à présent l'essieu arrière (14) qui est un essieu moteur dont le moteur (15) entraîne les deux roues arrière (16, 17) en rotation autour de leur axe horizontal commun de rotation (40).

Les roues arrière (16, 17) peuvent également pivoter, comme les roues avant, autour d'axes verticaux grâce à un montage sur rotules tout en restant parallèles entre elles, grâce à une barre de liaison (36) mais présentent deux modes de fonctionnement commandés par un vérin arrière (18) dont le corps a son extrémité fixée sur une rotule (19) de l'essieu arrière et à proximité de l'une des roues, l'extrémité (20) de la tige mobile étant montée à pivotement par une rotule montée sur une bielle de direction (21) de l'autre roue arrière.

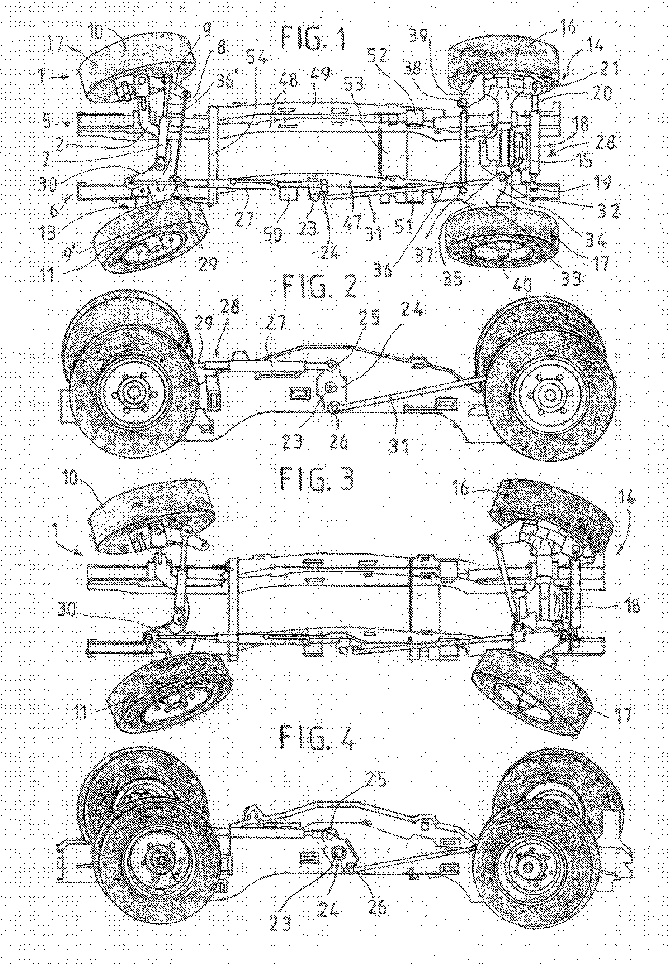

Le vérin arrière (18) fonctionne comme une barre. Lorsqu'il est en charge, il bloque l'essieu arrière en position droite, c'est-à-dire que les roues sont parallèles à la direction longitudinale du châssis (figures 1 et 2)

Lorsque le vérin est désactivé, il débloque l'essieu arrière et les roues arrière peuvent pivoter (figures 3 et 4).

On décrit à présent le dispositif de couplage-découplage formé d'un système de tringlerie et d'un vérin qui permet soit de dissocier le mouvement de pivotement des essieux avant et arrière, soit de les lier entre eux.

Sur l'un des cotés du châssis est prévu un pivot (23) d'axe horizontal autour duquel tourne une platine verticale (24) portant deux rotules (25, 26) diamétralement opposées.

Une des rotules (25) de la platine (24) réalise la liaison avec le corps (27) d'un vérin de couplage (28) dont la tige mobile (29) est montée également par une rotule sur une patte (30) solidaire de la roue avant située du même coté que le vérin de couplage (28) par rapport au châssis.

L'autre rotule (26) de la platine (24) réalise la liaison avec une barre de longueur fixe (31) dont l'autre extrémité est liée par une autre rotule (32) à une biellette de guidage (33) de la roue arrière placée du même coté que la barre (31) par rapport au châssis.

La biellette de guidage (33) présente une forme sensiblement en V avec un bras avant (35) et un bras arrière (34) qui porte la rotule (32) de liaison avec la barre (31).

Une tringle (36) de longueur fixe et disposée horizontalement est fixée par des rotules (37, 38) d'une part sur le bras avant (35) de la biellette de guidage (33) d'une des roues arrière, et d'autre part, sur la biellette de guidage (39) de l'autre roue arrière.

La tringle (36) est disposée à l'avant du moteur de l'essieu arrière tandis que derrière celui-ci est prévu le vérin arrière (18).

La commande des vérins (18, 28) est réalisée par un circuit de commande hydraulique dont le schéma est en figure (5).

Un distributeur (40) commande le vérin arrière (18) à double effet et le vérin de couplage (28) à double effet et alimente en huile :
- soit le vérin arrière (18) qui se met en position de blocage tandis que le vérin de couplage (28) n'est pas alimenté et réagit comme « une pompe à vélo » c'est à dire que son piston peut librement coulisser.
- soit le vérin de couplage (28) qui se met en position de blocage et fonctionne comme une barre, tandis que le vérin arrière (18) n'est pas alimenté et son piston peut librement coulisser.

Le distributeur (40) est alimenté en huile par un réservoir d'huile (41), il est couplé à un dispositif de recharge (42) avec accumulateur (22) intégrant un conjoncteur-disjoncteur, et il est commandé par des électroaimants (43, 44) reliés au poste de conduite du véhicule.

Le dispositif fonctionne comme suit.

Si le conducteur sélectionne une commande de vitesse rapide par un levier (45) sur son poste de conduite (figure 6) celle-ci actionne l'électroaimant (43) de la commande hydraulique et bloque le vérin arrière, ce qui immobilise l'essieu arrière en position droite, et libère la pression du vérin de couplage (28) dont la tige peut coulisser librement.

Le vérin de direction (8), sous l'action du volant du véhicule, dirige les roues avant (10, 11) (figures 1 et 2) mais cette action n'est pas transmise à la platine (24), et n'est donc pas transmise par la barre (31) à l'essieu arrière.

Les deux essieux sont donc désaccouplés et le véhicule roule en mode « deux roues directrices ».

Si le conducteur sélectionne la vitesse réduite par le levier (45) sur le poste de conduite (figure 6) automatiquement l'électroaimant (44) est activé, l'autre (43) étant désactivé et dans ce cas la pression du vérin de blocage est supprimée, sa tige est libérée pour permettre aux roues arrière de pivoter. Parallèlement le vérin de couplage (28) est mis en pression, sa tige est bloquée, et il fonctionne comme une barre.

Toute manoeuvre de pivotement sur les roues avant est alors transmise par le vérin de couplage à la platine (24) puis à l'essieu arrière dont les roues vont pivoter en sens contraire du pivotement induit à l'avant, le véhicule est alors automatiquement en mode « quatre roues directrices ».

En variante, il serait possible d'ajouter un bouton de sélection (46) qui permettrait au conducteur, lorsque le véhicule roule à petite vitesse, de sélectionner ou non le mode « quatre roues directrices » (figure 7).

Le dispositif selon l'invention atteint ses objectifs. Le véhicule peut circuler au dessus d'une vitesse prédéterminée en mode « deux roues directrices » et en dessous de ladite vitesse en mode « quatre roues directrices » qui permet d'augmenter la maniabilité du véhicule notamment dans des espaces étroits ou de conformation complexe. Le passage d'un mode à l'autre se fait en toute sécurité.

En outre la conformation des longerons du châssis permet d'y intégrer le dispositif de couplage-découplage de façon à ce que l'écartement desdits longerons puisse être réduit à l'espace entièrement occupé par les autres éléments fonctionnels tels que fond de cuve, tuyau d'aspiration, etc....

Pour l'implantation du dispositif de blocage-déblocage de l'essieu arrière décrit ci-dessus et pour tenir compte du cahier des charges qui impose de réaliser un véhicule de largeur d'environ 1,3 m pour pouvoir circuler dans des ruelles, la demanderesse a dû concevoir un châssis d'un type nouveau.

La faible largeur disponible entre les longerons longitudinaux du châssis ne permet pas d'y loger latéralement le dispositif de blocage.

C'est pourquoi les tubes composant traditionnellement les longerons d'un châssis sont remplacés par des couples de tôles découpées et mécanosoudées parallèles entre elles et verticales par exemple dont une vue en coupe verticale est schématisée en figure 9.

Le dispositif de couplage-découplage des essieux et composé notamment du vérin de couplage (28) et des platines (24) et barre (31), est intégré à l'intérieur d'un de ces couples de tôles, soit à droite, soit à gauche du châssis.

Sur les figures, pour faciliter la compréhension, la tôle extérieure recouvrant le dispositif de couplage-découplage n'a pas été représentée, seule la tôle intérieure (47) étant représentée. Sur l'autre côté du châssis, les deux tôles intérieures (48) et extérieures (49) sont représentées. Des éléments de rigidifications sont nécessaires telles que des entretoises (50, 51, 52) ou des barres de liaisons entre les couples de tôles (53, 54) par exemple.

Le véhicule équipé du dispositif selon l'invention et du châssis spécifique décrit possède un empattement de 1,3 m et peut circuler en mode quatre roues directrices à des vitesses ne dépassant pas une vitesse prédéterminée par exemple 15 km/h ou 25 km/h, et en mode deux roues directrices pour des vitesses supérieures à la vitesse prédéterminée, notamment il peut circuler sur route en toute sécurité jusqu'à 90 km/h. Entre les longerons du châssis, on peut prévoir les emplacements, par exemple, d'un réservoir d'huile, d'une pompe, d'un moteur etc....

## Revendications

1. Dispositif de passage d'un mode de conduite « quatre roues directrices » à un mode de conduite « deux roues directrices » et inversement, d'un véhicule automoteur de balayage de voirie à deux modes de circulation, un mode travail pour lequel la vitesse du véhicule est inférieure à vitesse prédéterminée et un mode route pour lequel la vitesse du véhicule est supérieure à la vitesse prédéterminée, ledit véhicule comportant deux essieux portés par un châssis à longerons parallèles à la direction du déplacement, et dont :
- un essieu avant (1) équipé de moyens aptes à faire pivoter simultanément deux roues avant (10, 11) dans le même sens autour d'axes verticaux tout en restant parallèles entre elles sous l'action d'un vérin de direction (8) actionné par un volant du véhicule.
- un essieu arrière (2) équipé également de moyens aptes à faire pivoter simultanément deux roues arrières (16, 17) dans le même sens autour d'axes verticaux tout en restant parallèles entre elles, l'essieu arrière étant en outre un essieu moteur dont un moteur (15) entraîne les deux roues arrières (16, 17) autour de leur axe horizontal commun (40) de rotation,
**caractérisé en ce que** le dispositif comporte un système de tringleries et de vérins à commande hydraulique qui permet de dissocier ou d'associer le mouvement de pivotement des roues avant et des roues arrières composé principalement de :
- un vérin arrière (18) hydraulique reliant les deux roues arrières et monté sur rotules, ledit vérin arrière pouvant être soit en charge et fonctionner comme une barre rigide, soit déchargé et laisser sa tige se déplacer librement.
- un dispositif de couplage-découplage composé principalement d'un vérin de couplage (28) monté sur rotule entre une roue avant et une platine verticale (24) montée à rotation sur un longeron latéral du châssis et entre les deux essieux avant et arrière, ledit vérin de couplage pouvant être soit en charge et fonctionner comme une barre rigide, soit déchargé et laisser sa tige se déplacer librement.
- ladite platine verticale (24) pouvant entraîner dans sa rotation lorsque le vérin de couplage (28) est en charge une barre de longueur fixe (31) liée à une biellette de guidage (33) de la roue arrière placée du même côté que la barre (31) par rapport au châssis du véhicule.

2. Dispositif selon la revendication 1, **caractérisé en ce que** la commande des vérins est réalisée par un circuit de commande hydraulique dont un distributeur (40) commande le vérin arrière (18) à double effet et le vérin de couplage (28) à double effet et alimente en huile :
- soit le vérin arrière (18) qui se met en position de blocage tandis que le vérin de couplage (28) n'est pas alimenté et réagit comme « une pompe à vélo » c'est à dire que son piston peut librement coulisser.
- soit le vérin de couplage (28) qui se met en position de blocage et fonctionne comme une barre, tandis que le vérin arrière (18) n'est pas alimenté et son piston peut librement coulisser.

3. Dispositif selon la revendication 2, **caractérisé en ce que** le distributeur (40) est alimenté en huile par un réservoir d'huile (41), il est couplé à un dispositif de recharge (42) avec accumulateur (22) intégrant un conjoncteur-disjoncteur, et il est commandé par des électroaimants (43, 44) reliés au poste de conduite du véhicule.

4. Dispositif selon l'une des revendications 1 à 3, **caractérisé en ce que** la conformation des longerons du châssis permet d'y intégrer le dispositif de couplage-découplage.

5. Dispositif selon la revendication 4, **caractérisé en ce que** les longerons du châssis sont remplacés par des couples de tôles parallèles réunies entre elles par des entretoises (50, 51, 52).

6. Véhicule automoteur de balayage-nettoyage de voirie du type comportant une cabine de pilotage et pouvant circuler sur des voies de circulation automobile du type à deux modes de circulation, un mode travail pour lequel la vitesse du véhicule est inférieure à vitesse prédéterminée et un mode route pour lequel la vitesse du véhicule est supérieure à la vitesse prédéterminée, les essieux étant portés par un châssis à longerons parallèles à la direction du déplacement, **caractérisé en ce qu'**elle comporte un dispositif selon l'une des revendications 1 à 3, et **en ce que** la conformation des longerons du châssis permet d'y intégrer le dispositif de couplage-découplage.

7. Véhicule selon la revendication 6, **caractérisé en ce que** l'écartement desdits longerons peut être réduit à 1,30 m.

## Revendications modifiées

### Revendications modifiées conformément à la règle 137(2) CBE.

**1.** Dispositif de passage d'un mode de conduite « quatre roues directrices » à un mode de conduite « deux roues directrices » et inversement, d'un véhicule automoteur de balayage de voirie à deux modes de circulation, un mode travail pour lequel la vitesse du véhicule est inférieure à vitesse prédéterminée et un mode route pour lequel la vitesse du véhicule est supérieure à la vitesse prédéterminée, ledit véhicule comportant deux essieux portés par un châssis à longerons parallèles à la direction du déplacement, et dont :
- un essieu avant (1) équipé de moyens aptes à faire pivoter simultanément deux roues avant (10, 11) dans le même sens autour d'axes verticaux tout en restant parallèles entre elles sous l'action d'un vérin de direction (8) actionné par un volant du véhicule.
- un essieu arrière (2) équipé également de moyens aptes à faire pivoter simultanément deux roues arrières (16, 17) dans le même sens autour d'axes verticaux tout en restant parallèles entre elles, l'essieu arrière étant en outre un essieu moteur dont un moteur (15) entraîne les deux roues arrières (16, 17) autour de leur axe horizontal commun (40) de rotation,
**caractérisé en ce que** le dispositif comporte un système de tringleries (31,33, 36, 36') et de vérins à commande hydraulique (7, 18, 28) qui permet de dissocier ou d'associer le mouvement de pivotement des roues avant (10, 11) et des roues arrières (16, 17) composé principalement de :
- un vérin arrière (18) hydraulique reliant les deux roues arrières (16, 17) et monté sur rotules, ledit vérin arrière pouvant être soit en charge et fonctionner comme une barre rigide, soit déchargé et laisser sa tige se déplacer librement.
- un dispositif de couplage-découplage composé principalement d'un vérin de couplage (28) monté sur rotule entre une roue avant (10 ou 11) et une platine verticale (24) montée à rotation sur un longeron latéral du châssis et entre les deux essieux avant et arrière, ledit vérin de couplage pouvant être soit en charge et fonctionner comme une barre rigide, soit déchargé et laisser sa tige se déplacer librement.
- ladite platine verticale (24) pouvant entraîner dans sa rotation, lorsque le vérin de couplage (28) est en charge, une barre de longueur fixe (31) liée à une biellette de guidage (33) de la roue arrière (17) placée du même côté que la barre (31) par rapport au châssis du véhicule.

**2.** Dispositif selon la revendication 1, **caractérisé en ce que** la commande des vérins est réalisée par un circuit de commande hydraulique dont un distributeur (40) commande le vérin arrière (18) à double effet et le vérin de couplage (28) à double effet et alimente en huile :
- soit le vérin arrière (18) qui se met en position de blocage tandis que le vérin de couplage (28) n'est pas alimenté et réagit comme « une pompe à vélo » c'est à dire que son piston peut librement coulisser.
- soit le vérin de couplage (28) qui se met en position de blocage et fonctionne comme une barre, tandis que le vérin arrière (18) n'est pas alimenté et son piston peut librement coulisser.

**3.** Dispositif selon la revendication 2, **caractérisé en ce que** le distributeur (40) est alimenté en huile par un réservoir d'huile (41), il est couplé à un dispositif de recharge (42) avec accumulateur (22)
